# EUROPEAN PATENT APPLICATION

(11) **EP 3 824 715 A2**
(43) Date of publication of application: **26.05.2021**
(21) Application number: 20208729.2
(22) Date of filing: 19.11.2020
(51) Int. Cl.: A01D 45/26, A01D 57/01

(54) **HARVESTING DEVICE FOR VEGETABLE PLANTS**

(30) Priority: 21.11.2019 NL 2024276
(71) Applicant: Tumoba Vegetable Harvesters B.V., 2991 VC Barendrecht (NL)
(72) Inventor: Molenaar, Hendrik Willem, 2991VC Barendrecht (NL)
(74) Representative: Ferguson, Alexander

(57) **Abstract**

Harvesting device for harvesting vegetable plants provided with a stalk and rooted in a subsoil, the device comprising a main frame, a main drive for moving the frame in a direction of movement across a field on which the vegetable plants have grown, a cutting device for cutting the stalk in order to dislodge an upper section of the vegetable plant to be harvested from the soil, a transfer device for transferring the cut stalk to a further treatment device in the harvesting device, and orienting means for raising the stalk of the vegetable plant, wherein the orienting means are disposed upstream of the cutting device, in a process direction opposing the direction of movement, and wherein the transfer device, when considered in process direction, is positioned downstream of the orienting means for receiving the stalk of the vegetable plant from the orienting means, the stalk having been raised by the orienting means.

## Description

### BACKGROUND OF THE INVENTION

The invention relates to a harvesting device for vegetable plants.

Conforming to the type of crop to be harvested, various machines have been developed for the harvesting of vegetable plants from a field. There are for instance machines for harvesting cauliflowers, broccoli, or Brussels sprouts. The development of harvesting machines generally focuses on limiting the deployment of personnel. This is particularly challenging, as within a crop to be harvested the condition may vary greatly.

An example of a harvesting machine with which the deployment of personnel can be kept limited, is described in European patent 0.962.153. The harvesting machine, adapted for the harvesting of Brussels sprouts, as disclosed in that document comprises a transfer device having a column that is rotatable about two axes on which column pairs of capturing arms or grippers are arranged. During moving the harvesting machine onward across the field, the stalk (stem including the crop or plant parts to be harvested attached thereto) of the vegetable plant runs in between the grippers and a cutting device of the harvesting machine ensures that the stalk is cut through just above the ground. The cut-off stalk is held alongside the column by the grippers, and in that condition is rotated with the column from a vertical orientation into a horizontal orientation. The stalk is then taken over by a delivery device and slipped into a picking head in horizontal direction, in which picking head the sprouts and foliage are removed from the stem.

Although satisfactory results have been obtained with this harvesting machine, an occurring variation in sprout plant stem orientation, turned out to give rise to problems when transferring the sprout plant after cutting off the stalk to the station where the sprouts are stripped from the stem. In reality, the stems may be positioned rather askew, randomly oriented, in which case they do not end up in the grippers or do not do so properly oriented. As a result, a part of the vegetable plants is not harvested by the machine, which means a loss to the farmer.

It is an object of the invention to improve on this.

It is an object of the invention to provide a harvesting machine with which the harvesting result can be augmented.

### SUMMARY OF THE INVENTION

According to one aspect, the invention provides a harvesting device for harvesting vegetable plants provided with a stem and rooted in a subsoil, the device comprising a main frame, a main drive for moving the frame in a direction of movement across a field on which the vegetable plants have grown, a cutting device for cutting the stalk (in particular the stem) in order to dislodge an upper section of the vegetable plant to be harvested from the soil, a transfer device for transferring the cut stalk to a further treatment device in the harvesting device, and orienting means for raising the stalk of the vegetable plant, wherein the orienting means are disposed upstream of the cutting device, in a process direction opposing the direction of movement, and wherein the transfer device, when considered in process direction, is positioned downstream of the orienting means for receiving the stalk of the vegetable plant from the orienting means, the stalk having been raised by the orienting means.

Because of the orienting means, askew stems of the vegetable plants, which would otherwise be out of the transfer device's range and therefore be left out of the harvesting process, can still be presented to the transfer device and be received by it, as a result of which the vegetable plants in question can still be processed in the harvesting device.

The orienting means can comprise at least one engagement member for the stalk and an engagement member drive for the engagement member, wherein the engagement member drive is adapted for moving the engagement member in upward direction. The stalk, the bottom end of which is still kept in the soil, may as it were be straightened out by the orienting means.

In one embodiment, the engagement member forms a first engagement member, wherein the engagement member drive is positioned for letting the first engagement member engage onto the rear of the stalk, when considered in process direction. The engagement member drive can then be adapted for moving the first engagement member according to a path, in particular a straight path, which in process direction is inclined in upward and downstream direction. In that way, a main frame moving counter process direction, can keep sufficiently effective contact with the stalk while the stalk is being raised. Alternatively, the engagement member drive can be adapted for moving the first engagement member according to an upwardly curved path, in particular a circular path, in particular having the concave side at its downstream side.

In one embodiment, the engagement member drive is operative in a multiple manner and the first engagement member is also movable by the engagement member drive between an inactive position, lateral of the relative path of movement of the stalk, and an active position, extending into said path of movement, at the rear of the stalk in order for a passage of the stalk not to be hampered. The movement can take place according to a horizontal direction transverse to the process direction.

In a compact embodiment, the engagement member drive comprises a cylinder assembly, wherein the first engagement member is disposed on its piston and executes said horizontal movement with it. During said movement, the cylinder remains in its place in the horizontal sense.

The orienting means can comprise two first engagement members, which in the inactive position are positioned on either side of the relative path of movement of the stalk, and in the active position extend to near each other or against each other. In that way the magnitude of the said horizontal movement per engagement member can remain limited.

In one embodiment, the orienting means comprise at least one further engagement member for the stalk, positioned to engage onto a lateral side of the stalk. The orienting means can comprise two such further engagement members, which are positioned on either side of the relative path of movement of the stalk in order to engage onto both lateral sides of the stalk. In that way, the stalk can be engaged onto several sides during the process of orienting.

In a compact embodiment, the orienting means comprise an auxiliary frame on which the at least one engagement member and the at least one further engagement member are disposed for joint upward movement by the engagement member drive.

The auxiliary frame can be moved such by the engagement member drive that the relative position of both engagement members on the auxiliary frame remains constant during the movement.

In a further development, the engagement member and/or further engagement member comprise at least one roller. The roller can be freely rotatable about a lying centre line. The centre line may for instance be defined by the aforementioned relatively stationary cylinder, about which the roller will then rotate. In that way, the engagement member can roll upwards, as it were, along the stalk, resulting in a limited risk of the crop parts to be harvested and situated on the stem getting damaged. This is further enhanced if the roller has a surface of elastic material. The elastic material may be a foamed material, preferably having closed cells, so that the elasticity does not deteriorate as a result of the cells getting polluted.

In one embodiment, the cutting device comprises a first operating device provided with a first contact sensor for activating the cutting device after contacting the stalk.

In a similar way, the orienting means can comprise a second operating device, having a second contact sensor for activating the engagement member drive after contacting the stalk.

The contact sensor can then be configured as a pin extending in the relative path of movement of the stalk of the vegetable plant, wherein the pin forms the extendable part of a cylinder assembly and after contact can be retracted to out of said path of movement. The cylinder assembly can then be disposed in the frame in a manner so as to be movable in the horizontal plane due to contact with the stalk, between an initial or hitting position in which the pin can be hit by the stalk and an end position in which the pin has been taken along by the stalk in process direction, wherein the respective first or second operating device is adapted for retracting the pin once the end position has been reached. Preferably, the cylinder assembly is spring-biassed to the hitting position.

As for instance known from European patent 0.962.153, the cutting device may comprise a circular blade or circular saw. In one embodiment according to the invention, the cutting device comprises a blade assembly, having at least one blade and a drive for moving the blade back and forth to sever the stalk, in particular the stem. Preferably, the blade is movable in a horizontal direction transverse to the process direction. The blade assembly can comprise two blades that can be moved towards each other and away from each other, as a result of which the cutting can be done quickly.

In a further development, the transfer device is provided with pairs of capturing arms for engaging around the stalk of the vegetable plant, wherein the capturing arms can be moved between a receiving position in which the stalk of the vegetable plant can be received and a confining position in which the stalk is kept confined by the capturing arms, wherein the capturing arms are positioned above the cutting device in order to receive the stalk of the vegetable plant, which stalk was raised by the orienting means, and retain the stalk during and after severing the stalk, in particular the stem, by using the cutting device, wherein the transfer device is movable between a receiving position in which the stalk can be engaged around by the capturing arms and a transfer position, in which the stalk can be taken over by a further treatment device in the harvesting device and the capturing arms can be placed into a stalk-release position.

In one embodiment, the capturing arms of at least one pair of capturing arms are disposed on respective, driven rotary rods to be rotated towards each other for confining the stalk and rotated away from each other for releasing the stalk, wherein the capturing arms each comprise a cylinder and a pin which is extendable from the cylinder and retractable into the cylinder in order to increase and reduce, respectively, the length of the capturing arm.

The harvesting device according to the invention can be provided with a control device for controlling the drives included in the device.

The harvesting device according to the invention can be adapted for the harvesting of sprouts. Alternatively, the harvesting device according to the invention can be adapted for the harvesting of kale.

The cutting device, the transfer device and the orienting means can be housed in a feeding device. Several feeding devices may be arranged next to one another on the main frame.

The aspects and measures described in this description and the claims of the application and/or shown in the drawings of this application may where possible also be used individually. Said individual aspects and other aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figures 1A-D show a feeding device for a harvesting device according to the invention, in an inclined front view, in a side view, in an inclined rear view and in a detail, respectively;
Figures 2A and 2B show the feeding device of figures 1A-D during a next process step;
Figures 3 and 4 show the feeding device of figures 1A-D during next process steps;
Figures 5A and 5B show the feeding device of figures 1A-D in a next process step, in an inclined front view and in an inclined rear view, respectively;
Figures 6 - 8 show the feeding device of figures 1A-D during a number of subsequent process steps;
Figure 9 shows a series of feeding devices according to figures 1A-D positioned next to each other, such as they may be part of a plural harvesting machine according to the invention;
Figures 10A-C show a part of an alternative embodiment of a device according to the invention.

### DETAILED DESCRIPTION OF THE DRAWINGS

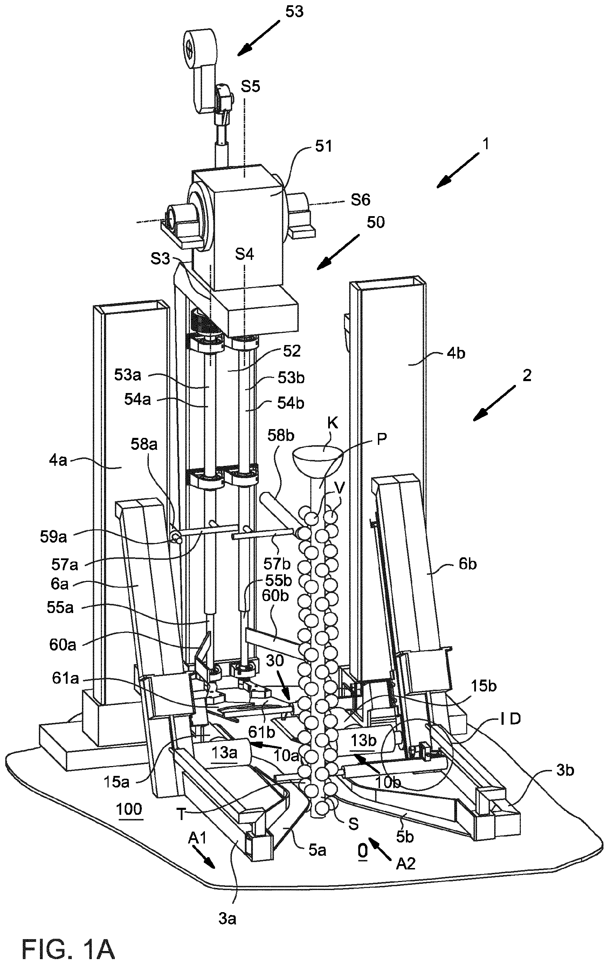

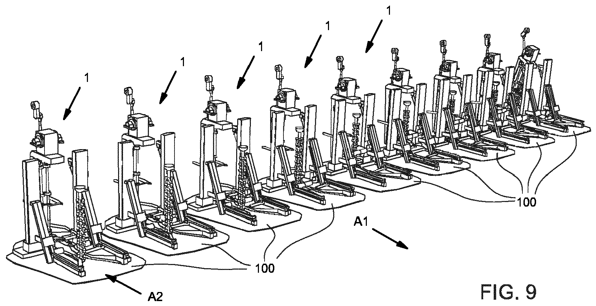

Feeding device 1 of figures 1A-D comprises a frame 2 that is attached to a main frame (not shown) on which several of such feeding devices 1 are attached next to one another (figure 9) and on which treatment devices for the fed vegetable plants are arranged. The main frame can be moved over the ground 100 in the direction 1A. The feeding device 1 comprises a cutting device, a transfer device and orienting means.

The frame 2 comprises two parallel girders 3a,b that extend in direction 1A and two columns 4a,b to which the girders 3a,b are attached and which themselves are attached to the main frame. Feed guide members 5a,b are attached at the outer ends of the girders 3a,b in such a way as to be able to enlarge their mutual distance springily when contacting a vegetable plant. The feed guide members 5a,b define a tapering feed space O which merges into a narrower passageway T.

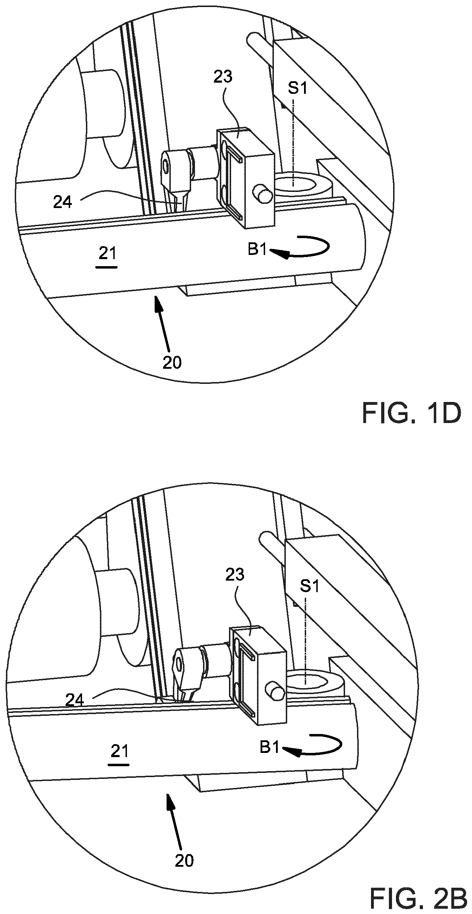

At the location of the passageway T, a first activator assembly 20 (an example of the above-mentioned second operating device) is positioned. The activator assembly 20 comprises a hydraulic or pneumatic cylinder 21 and a piston pin 22. The cylinder 21 is rotatably attached to the girder 3b of the frame 2, see figure 1D. The activator assembly further comprises a contact sensor or switch 23 disposed on the girder 3b, which switch is connected to a control device that is not shown. The switch 23 comprises a detection tongue 24. The cylinder 21 is spring-loaded into a position transverse to the direction of travel A1 and is able to rotate in the direction B1 about centre line S1 and back again. The switch 23 is adapted such, that when upon rotation the cylinder 21 abuts the detection tongue 24 and moves it, the cylinder 21 is activated to retract the pin 22 in order to make a space above the passageway T free.

Guide members 6a,b are disposed between the girders 3a,b and the columns 4a,b, at the rear of which guide members cylinder assemblies 7a,b are positioned. The assemblies 7a,b comprise pneumatic or hydraulic cylinders 8a,b that are attached to the columns 4a,b and extend upwards through it and with the upper end are hinged to the beams of the main frame, which beams extend from the columns 4a,b. The assemblies 7a,b further comprise piston rods 9a,b which are guided at the rear of the guide members 6a,b. Engagement member assemblies in the form of roller assemblies 10a,b are attached at the lower end of the piston rods 9a,b. The roller assemblies 10a,b each comprise an auxiliary frame or carriage 11a,b which is attached to the lower end of the piston rod 9a,b and is guided by the guide members 6a,b. On each carriage 11a,b a double-acting cylinder 12a,b is attached, which cylinder extends horizontally inwards transverse to the direction A1, A2 and on which a roller 13a,b of foam rubber material having closed cells is bearing mounted in a freely rotatable manner. The rollers 13a,b together with the cylinders 12a,b form cylinder assemblies, wherein the rollers 13a,b are attached to the piston rods and can be moved back and forth over the cylinders 12a,b in absolute sense, between an inactive position and an active position. The roller assemblies 10a,b furthermore each comprise a roller holder 14a,b that is rigidly attached to the carriage 11a,b at the lower end of the piston rod 9a,b and wherein a roller 15a,b of foam rubber material having closed cells is arranged in a freely rotatable manner. The rollers 15a,b have a centre line of rotation parallel to the direction A1.

The cylinder assemblies 7a,b are controllable by the above-mentioned control device, in response to the signal of the activator 23. By retracting the piston rods 9a,b the roller assemblies 10a,b can be moved upwards, parallel to the (straight) guide members 6a,b. The rollers 13a,b and 15a,b surround an orienting space R for the stalk S of a vegetable plant.

Behind the orienting space R, a second activator assembly 30 (an example of the above-mentioned first operating device) is positioned. The activator assembly 30 comprises a pneumatic or hydraulic cylinder 31 that is rotatably attached to the frame 2 and a piston pin 32. The activator assembly 30 further comprises a contact sensor or switch 33 that is connected to the control device that is not shown. A detection tongue 34 is attached to the switch 33. The cylinder 31 is spring-loaded into a position transverse to the direction of travel A1 and is able to rotate in the direction K1 about centre line S2 and back again. The switch 33 is adapted such, that when upon rotation the cylinder 31 abuts the detection tongue 34 and moves it, the cylinder 31 is activated to retract the pin 32 in order to make a passageway free.

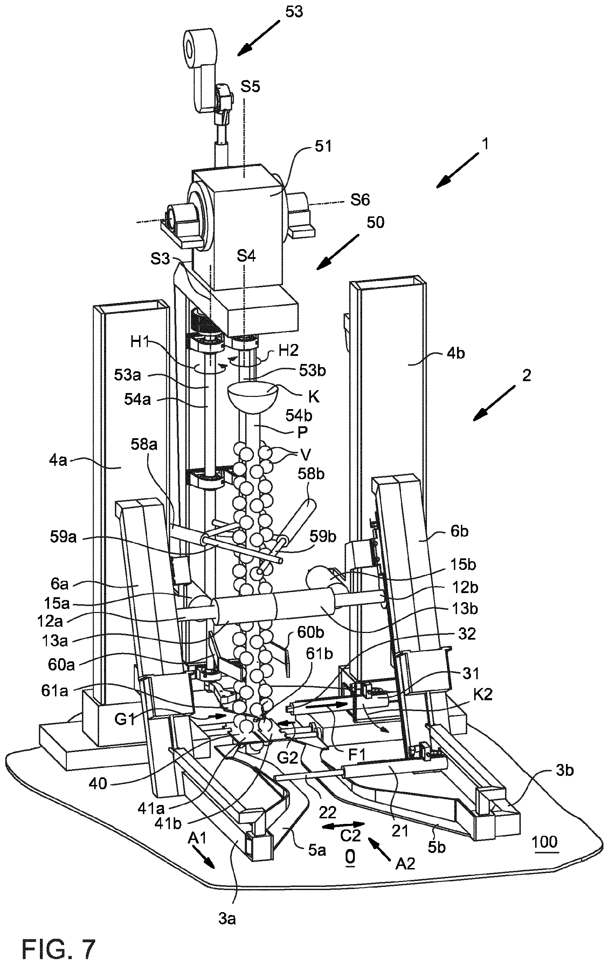

A cutting device 40 (figure 7) is positioned behind the activator assembly 30, which cutting device comprises two blades 41a,b that can be moved towards and away from each other in horizontal direction, controlled by the control device, in response to a signal from the switch 33. Using the cutting device 40, the stem of a stalk of a vegetable plant to be treated can be severed, wherein the bottom section S' of its stalk remains rooted in the soil 100.

A transfer device 50 is disposed in the space above the cutting device, with which transfer device the cut stalk of the vegetable plant can be transferred in a controlled manner to a treatment device disposed elsewhere in the main frame. The transfer device 50 may be of the type as described and shown in European patent 0.962.153 of Tumoba B.V. The transfer device 50 comprises a gear mechanism 51 and an L-shaped holder 52 held by it having a column 52a and an upper arm 52b. At the column 52a three pairs of capturing arms are disposed, at vertical distance from each other. The capturing arms are oriented towards the orienting space. For rotation in the horizontal plane, the capturing arms are attached to rotary rods 53a,b that extend vertically along the holder 52 and are each designed double with an outer tube 54a,b and an inner rod 55a,b situated within it. The rotary rods 53a,b are rotatable about centre lines S3 and S4 by a drive that is accommodated in the upper arm 52b of the L-shaped holder 52. The outer tubes 54a,b can be rotated by the drive independent of the inner rods 55a,b. The upper pair of capturing arms 56a,b comprises cross-rods 57a,b that are attached to the outer tubes 54a,b. Cylinder assemblies 58a,b are attached to the cross-rods 57a,b, the pins 59a,b of which cylinder assemblies can be extended. The centre pair of buckled capturing arms 60a,b is attached to the inner rods 55a,b. The bottom pair of capturing arms 61a,b is attached to the inner rods 55a,b as well.

With an upper arm 52b, the L-shaped holder 52 is attached to the head 51 so as to be rotatable about centre line S5. Furthermore, the head 51 itself is rotatable about centre line S6 of a shaft that is stationary in the main frame. For this rotation, a crank mechanism 53 is provided analogous to the mechanism described in the above-mentioned European patent. The column 52a of the holder 52 can be rotated with it about two centre lines, from a substantially vertical receiving position into a substantially horizontal transfer position, in which a vegetable plant to be treated can be transferred to a next station in the harvesting machine.

In use, the harvesting device including the feeding devices 1 is moved onward in the direction A1, across the field 100. The Brussels sprout plants P to be harvested are standing in rows adjacent to each other in the field 100, wherein the sprout plants in a row end up one by one in the feeding device 1. With a plural embodiment according to figure 9, several rows of sprout plants can be harvested simultaneously. The sprout plants P are then treated in the process direction A2, which is opposing to the process direction A1. The sprout plants have a stalk S on which the sprouts V are situated, and a head K.

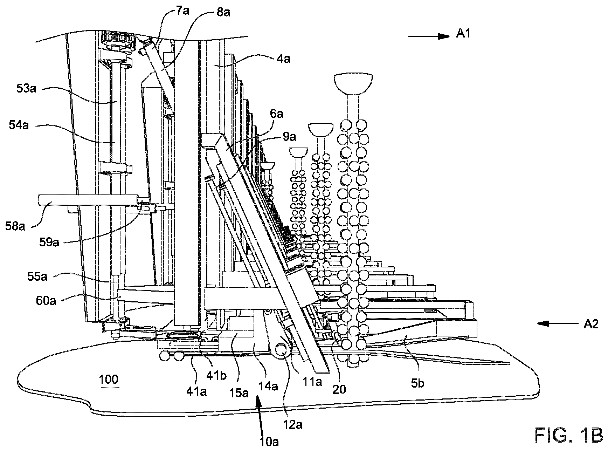

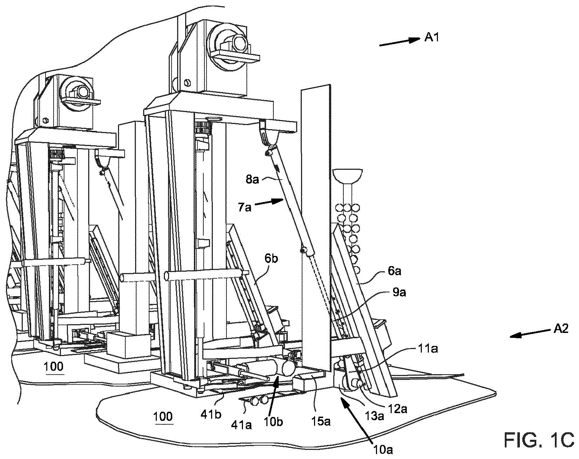

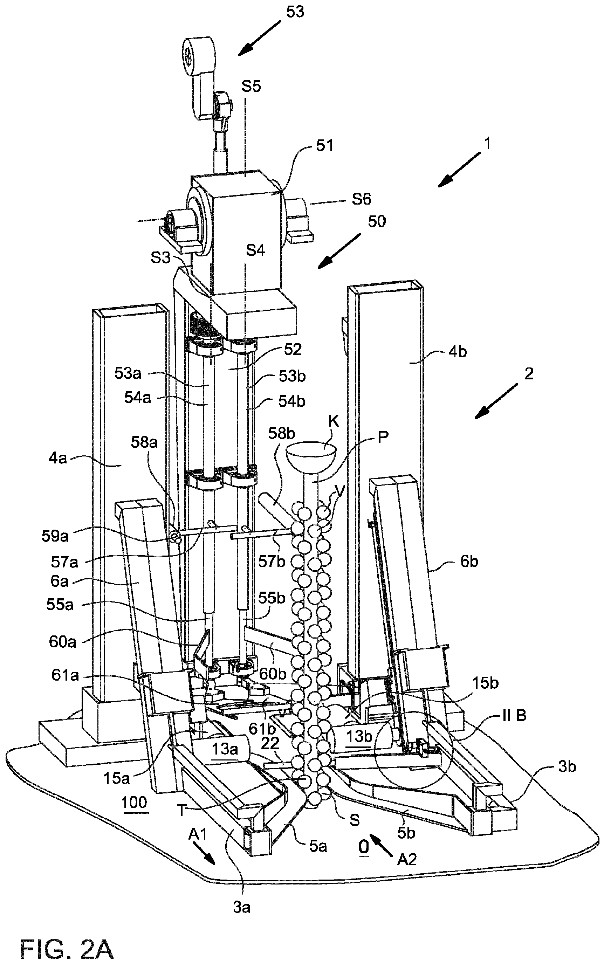

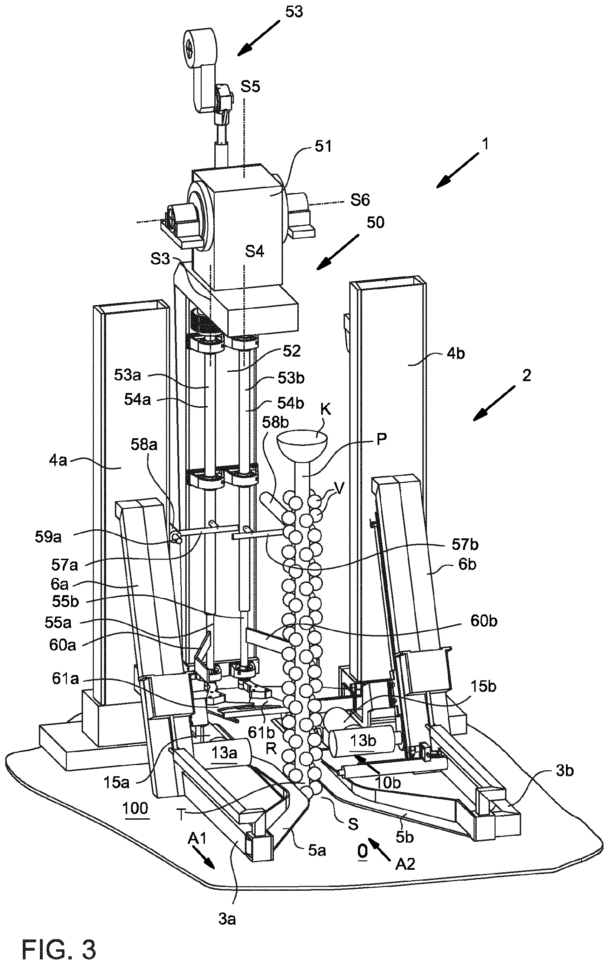

In figure 1, the sprout plant P has run into the passageway T via the feed space O. The sprout plant P then abuts the pin 22 of the cylinder assembly 20, which pin is in the hitting position, figure 2A, and takes this pin along so that the cylinder 21 is rotated in the direction B1, figure 2B. When the cylinder 21 abuts the detection tongue 24, the switch 23 gives a signal to the control unit controlling the cylinder 21 to retract the pin 22 in direction C1, figure 3, and the plant P is able to move onwards through the passageway T. The cylinder 21 springs back again, direction B2, into the initial position, transverse to the directions A1, A2.

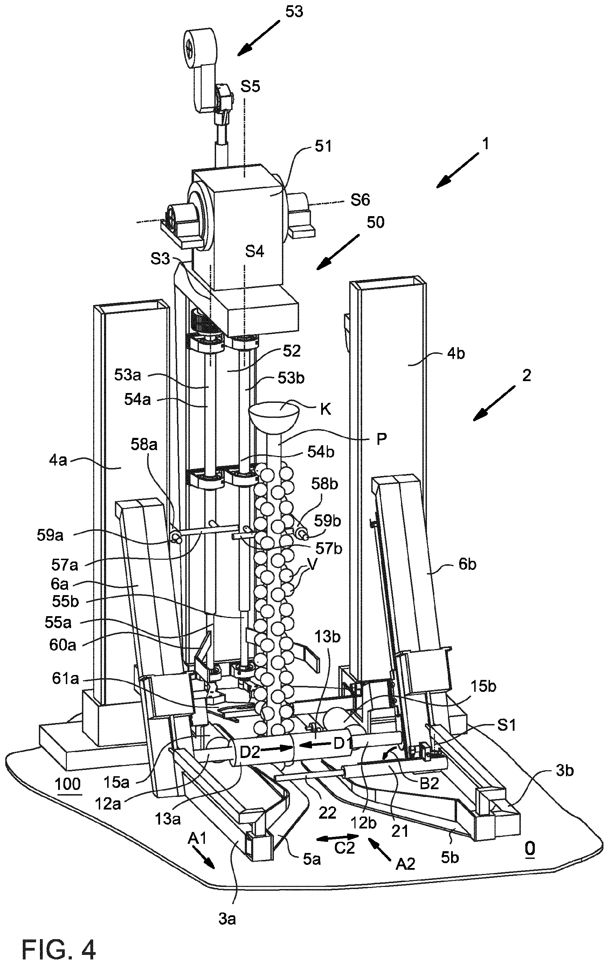

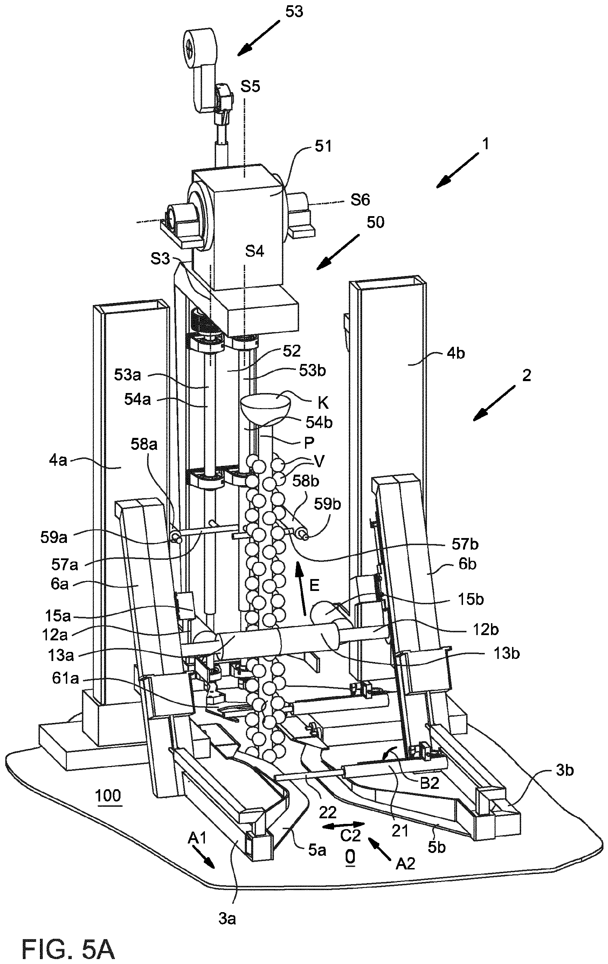

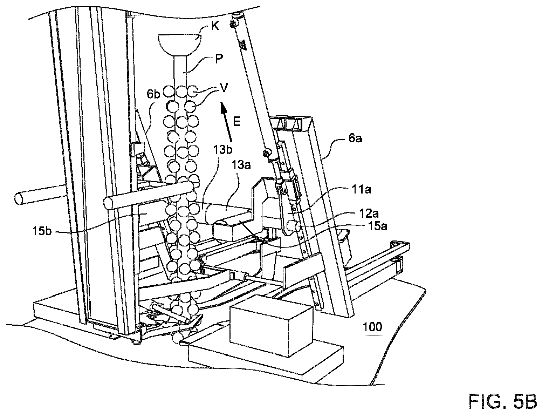

The plant P has now entered the slightly broader orienting space R. The switch 23 has given the control device a signal that the cylinder 21 has ended up in the initial position once more. The control device then controls the cylinder 21 for extending the pin 22, direction C2 (figure 4) and controls the cylinder assemblies 12/13 to urge the rollers 13a,b towards each other, direction D1, D2, figure 4. The rollers 13a,b then almost abut each other. Subsequently, in continuing (relative) travel of the plant in process direction A2, the control device controls the cylinders 7a,b to retract the piston rods 9a,b direction E, figures 5A and 5B. Consequently, the roller assemblies 10a,b are moved upwards along the guide members 6a,b, wherein the rollers 13a,b and the rollers 15a,b form a U-shaped confinement for the stalk S, wherein the U opens towards the column 52a. As a result, a stalk curved laterally or rearward (direction A1) can be raised into a position in which it can be engaged around by the pairs of capturing arms on the column 52a.

The rollers can then roll freely along the stalk with sprouts, as a result of which the sprout-stalk connection can remain intact. This is further enhanced by the resilience of the surface of the rollers. Due to the inclined positioning of the guide members 6a,b, the roller assemblies 10a,b also move along with the plant P in the direction A2 during the upward movement, wherein the space around the confined area of the stalk S also becomes smaller, as the distance between the rollers 13a,b and the column 52a becomes smaller. The rollers 13a and 15a and the rollers 13b and 15b retain their positions relative to each other, in this case they remain lying with their centre lines in a horizontal plane, which is moved upwards.

When the roller assemblies 10a,b have reached their highest position this will be noticed by a sensor, which issues a signal to the control device. The latter controls the cylinders 58a,b to extend the pins 59a,b and then controls the drive of the outer tubes 54a,b to rotate them about centre lines S3 and S4 and thus rotate the capturing arms 56a,b and thus the cross-rods 57a,b. The stalk will then be surrounded there by the capturing arms 56a,b. The roller assemblies 10a,b can then be moved downwards again by the cylinder assemblies 7a,b.

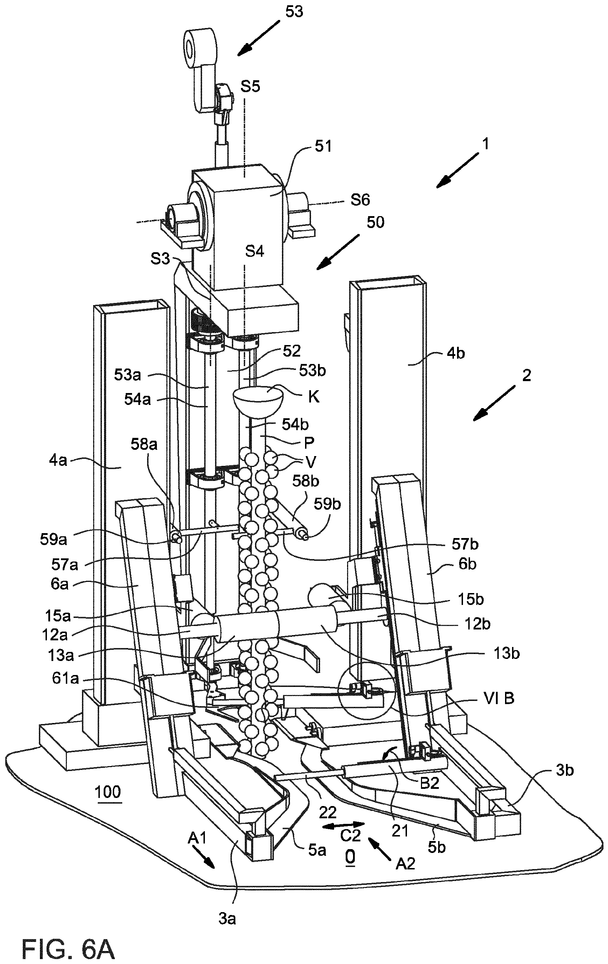

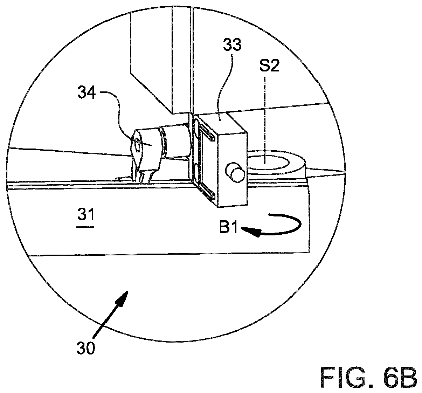

When the stalk S runs into the pin 32, situated in the hitting position, of the cylinder 31 of the second activator assembly 30, a process similar to that of activator assembly 20 follows, see figures 6A and 6B. The cylinder 32 rotates along in the direction K1. Upon the cylinder 31 abutting the detection tongue 34, the switch 33 gives a signal to the control unit which then controls the cylinder 31 to retract the pin 32, direction F1, figure 7, and the passageway is free for the stalk S. The cylinder 31 springs back again, direction K2, to the initial position, transverse to the directions A1, A2.

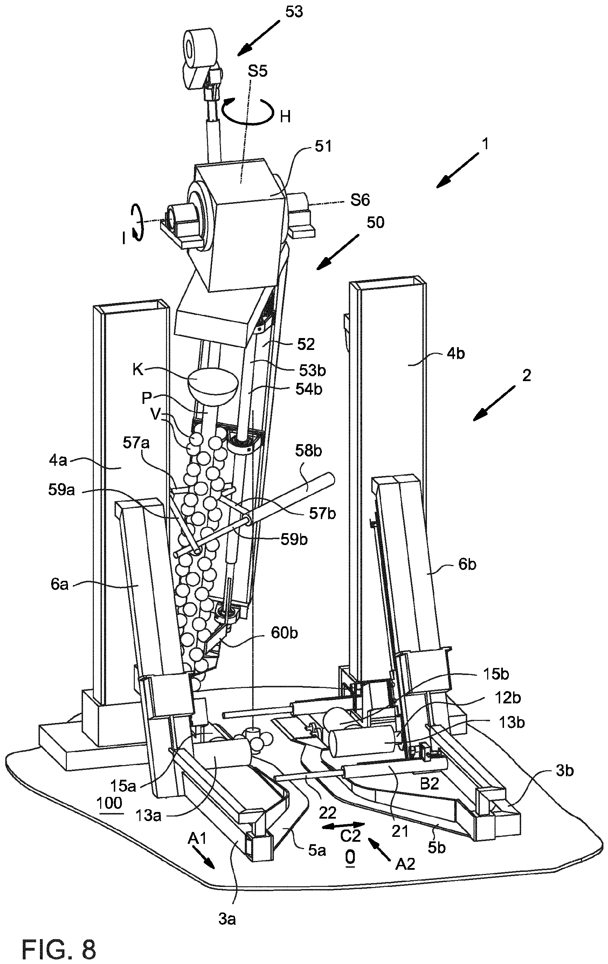

The plant P has now arrived in its entirety within the range of the other pairs of capturing arms on the column 52a. The activator assembly 30 has given the control device a signal that the cylinder 31 has ended up in the initial position once more. The control device then controls the cylinder 31 for extending the pin 32 once more. The control device controls the drive of the inner rods 54a,b to rotate about the centre lines S3 and S4. As a result, the stalk S of the plant P is also embraced by the buckled arms 60a,b and the capturing arms 61a,b. The stalk S is then confined at three locations that are vertically spaced apart. Both pairs of capturing arms 60a,b and 61a,b offer the possibility to process crops with shorter stems. Subsequently the control device controls the cutting device 40, as a result of which the blades 41a and 41b move towards each other, directions G1, G2, to sever the stem of the stalk S at a short distance above the ground, see figure 7. A stem stump S' is then left in the field 100, see figure 8. The section of the stem above it, bearing the sprouts V, is then separated from the field 100, yet kept confined against the column 52a.

The control device then controls the drives for the holder 52 in order to have it, with the stalk kept confined by the pairs of capturing arms, rotate in the directions H and I, about the centre lines S5 and S6, in order to bring the holder 52 in an orientation in which the column 52a extends horizontally, oriented with the outer end in process direction A2. The column 52a can then be situated below the stalk S, wherein the stalk can be supported on the transverse rods 57a,b and then remains spaced apart from the rotary rods 53a,b. In that condition the stalk S with sprouts V can be taken over by a next tool in the harvesting device.

Once the stalk has been discharged, the holder 52 can be rotated back again. It may be so that meanwhile a next stalk has been raised by the orienting means, wherein the roller assemblies 10a,b will then be in an elevated position. A conflict between the capturing arms 56a,b and the rollers 15a,b can then be prevented as the capturing arms 56a,b can be shortened by the cylinder/pin combination.

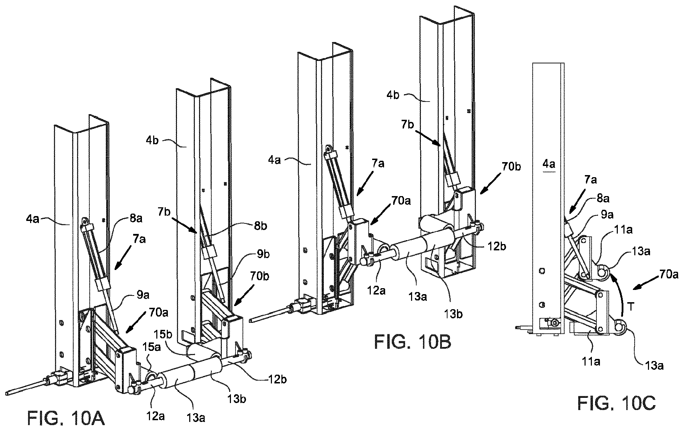

Figures 10A-C show an alternative arrangement for the engagement member assemblies, roller assemblies. Here, the roller assemblies 10a,b are attached to upright columns 4a,b by means of parallelogram structures 70a,b. The parallelogram structures 70a,b are movable by cylinder assemblies 7a,b, wherein the mutual orientation of the rollers 13a,b and the rollers 15a,b is kept intact during the movement. In this case the roller assemblies 10a,b are moved according to a curved path, in particular a circular path T, between a low initial position and a high final position, both shown in figure 10C.

The invention is/inventions are not at all limited to the embodiments discussed in the description and shown in the drawings. The above description has been included to illustrate the operation of preferred embodiments of the invention and not to limit the scope of the invention. Starting from the above explanation many variations that fall within the spirit and scope of the present invention will be evident to an expert. Variations of the parts described in the description and shown in the drawings are possible. They can be used individually in other embodiments of the invention(s). Parts of the various examples given can be combined together.

## Claims

1. Harvesting device for harvesting vegetable plants provided with a stalk and rooted in a subsoil, the device comprising a main frame, a main drive for moving the frame in a direction of movement across a field on which the vegetable plants have grown, a cutting device for cutting the stalk in order to dislodge an upper section of the vegetable plant to be harvested from the soil, a transfer device for transferring the cut stalk to a further treatment device in the harvesting device, **characterised by** orienting means for raising the stalk of the vegetable plant, wherein the orienting means are disposed upstream of the cutting device, in a process direction opposing the direction of movement, and wherein the transfer device, when considered in process direction, is positioned downstream of the orienting means for receiving the stalk of the vegetable plant from the orienting means, the stalk having been raised by the orienting means.

2. Device according to claim 1, wherein the orienting means comprise at least one engagement member for the stalk and an engagement member drive for the engagement member, wherein the engagement member drive is adapted for moving the engagement member in upward direction, wherein, preferably, the engagement member forms a first engagement member, wherein the engagement member drive is positioned for letting the first engagement member engage onto the rear of the stalk, when considered in process direction.

3. Device according to claim 2, wherein the engagement member drive is adapted for moving the first engagement member according to a path, in particular a straight path, which in the process direction, is inclined in upward and downstream direction, or wherein the engagement member drive is adapted for moving the first engagement member according to an upwardly curved path, in particular a circular path, in particular having the concave side at its downstream side.

4. Device according to claim 2 or 3, wherein the engagement member drive is operative in a multiple manner and the first engagement member is also movable by the engagement member drive between an inactive position, lateral of the relative path of movement of the stalk, and an active position, extending into said path of movement, at the rear of the stalk, wherein, preferably,
- the engagement member drive is adapted for movement of the first engagement member according to a direction transverse to the process direction, in particular horizontally transverse, and/or
- the engagement member drive comprises a cylinder assembly, wherein the first engagement member is disposed on its piston and executes said horizontal movement with it.

5. Device according to claim 4, wherein the orienting means comprise two first engagement members, which in the inactive position are positioned on either side of the relative path of movement of the stalk, and in the active position extend to near each other or against each other.

6. Device according to any one of the preceding claims, wherein the orienting means comprise at least one further engagement member for the stalk, positioned to engage onto a lateral side of the stalk, wherein, preferably, the orienting means comprise two such further engagement members, which are positioned on either side of the relative path of movement of the stalk in order to engage onto both lateral sides of the stalk.

7. Device according to claim 6, wherein the orienting means comprise an auxiliary frame on which the at least one engagement member and the at least one further engagement member are disposed for joint upward movement by the engagement member drive, wherein, preferably, the auxiliary frame can be moved such by the engagement member drive that the relative position of both engagement members (the one engagement member and the further engagement member) on the auxiliary frame remains constant during the movement.

8. Device according to any one of the preceding claims, wherein the engagement member and/or further engagement member comprise at least one roller, wherein, preferably, the roller is freely rotatable about a centre line and/or, preferably, the roller has a surface of elastic material, preferably a foamed material, preferably having closed cells.

9. Device according to any one of the preceding claims, wherein the cutting device comprises a first operating device provided with a first contact sensor for activating the cutting device after contacting the stalk.

10. Device according to any one of the preceding claims, wherein the orienting means comprise a second operating device, having a second contact sensor for activating the engagement member drive after contacting the stalk.

11. Device according to claim 9 or 10, wherein the contact sensor is configured as a pin extending in the relative path of movement of the stalk of the vegetable plant, wherein the pin forms the extendable part of a cylinder assembly and after contact can be retracted to out of said path of movement, wherein, preferably, the cylinder assembly is disposed in the frame in a manner so as to be movable in the horizontal plane due to contact with the stalk, between an initial or hitting position in which the pin can be hit by the stalk and an end position in which the pin has been taken along by the stalk in process direction, wherein the respective first or second operating device is adapted for retracting the pin once the end position has been reached, wherein, preferably, the cylinder assembly is spring-biassed towards the hitting position.

12. Device according to any one of the preceding claims, wherein the cutting device comprises a blade assembly, having at least one blade and a drive for moving the blade back and forth to sever the stalk, in particular the stem, wherein, preferably,
- the blade can be moved in a horizontal direction transverse to the process direction, and/or
- the blade assembly comprises two blades that can be moved towards each other and away from each other.

13. Device according to any one of the preceding claims or according to the preamble of claim 1, wherein the transfer device is provided with pairs of capturing arms for engaging around the stalk of the vegetable plant, wherein the capturing arms can be moved between a receiving position in which the stalk of the vegetable plant can be received and a confining position in which the stalk is kept confined by the capturing arms, wherein the capturing arms are positioned above the cutting device in order to receive the stalk of the vegetable plant, in particular the stalk raised by the orienting means, and retain the stalk during and after severing the stalk, in particular the stem, using the cutting device, wherein the transfer device is movable between a receiving position in which the stalk can be engaged around by the capturing arms and a transfer position, in which the stalk can be taken over by a further treatment device in the harvesting device and the capturing arms can be placed into a stalk-release position, wherein, preferably, the capturing arms of at least one pair of capturing arms are disposed on respective, driven rotary rods to be rotated towards each other for confining the stalk and rotated away from each other for releasing the stalk, wherein the capturing arms each comprise a cylinder and a pin which is extendable from the cylinder and retractable into the cylinder in order to increase or reduce, respectively, the length of the capturing arm.

14. Device according to any one of the preceding claims, provided with a control device for controlling the drives included in the device.

15. Device according to any one of the preceding claims, adapted for the harvesting of sprout plants, or adapted for the harvesting of kale.
